# EUROPEAN PATENT APPLICATION

(11) **EP 4 691 593 A1**
(43) Date of publication of application: **11.02.2026**
(21) Application number: 24193727.5
(22) Date of filing: 08.08.2024
(51) Int. Cl.: B01D 39/16, B01D 39/18, B01D 39/20

(54) **HYDROPHOBIC FILTER MEDIUM**

(71) Applicant: Neenah Gessner GmbH, 83052 Bruckmühl (DE)
(72) Inventor: HÖRL, Werner, 83052 Bruckmühl (DE); FRITZE, Fabian, 83052 Bruckmühl (DE); NIEDERHUBER, Armin, 83052 Bruckmühl (DE); KAMPE, Anja, 83052 Bruckmühl (DE); LEBSANFT, Martin, 83052 Bruckmühl (DE)
(74) Representative: Haseltine Lake Kempner LLP

(57) **Abstract**

Herein is disclosed a filter medium comprising: a nonwoven layer, the nonwoven layer having been treated with a sizing agent, and then treated with a hydrophobic, stiffening binder resin, and then optionally corrugated. Also disclosed is a method of producing a filter medium. The filter medium may be a fuel filter, oil filter, air filter, or an electric discharge filter.

## Description

The present disclosure relates to a filter medium comprising a nonwoven layer that has been treated with a sizing agent and with a hydrophobic, stiffening binder resin, methods of producing the filter medium, and devices comprising the filter medium.

### Background

Filtration systems are used to remove undesirable materials such as particulates from liquids or gases by passing the liquid or gas through a filter medium. The requirements on the degree of purity for filtered gases and liquids are becoming stricter, in industrial settings, as well as in fields of foodstuffs, consumer products, and medical applications. Furthermore, it is often desirable to obtain highly pure streams of gas or liquid prior to their introduction into a device.

A filter medium has several different properties including thickness, basis weight, dust holding capacity, filter efficiency, permeability, air permeability, hydrophobicity, pore size, maximum pore size, average pore size stiffness, burst strength, tensile strength, elongation at break, chemical composition, and chemical content. It is often desirable to improve one property of a filter medium so that it is suited to a use in a particular filtration process or system. However, improving any property of the filter medium may adversely affect one or more of the other properties. Achieving a desirable combination of these properties whilst being able to produce the filter medium in a time, energy and cost-effective process can be challenging.

When filter media are used to purify streams of liquids or gasses which comprise water, the water may absorb into the filter media. Absorption of water (i.e., wetting of the filter medium) may result in reduced permeability of the filter medium and therefore a decrease in filtration performance. Furthermore, absorption of water may result in the filter medium becoming more fragile, less rigid, and more prone to damage or deterioration (e.g., bursting of the filter medium). This loss in structural integrity is undesirable as it can decrease the lifespan of the filter medium. It is therefore desirable for the filter media to be hydrophobic to minimise the absorption of water. It is also desirable that the filter medium is readily dried if it does absorb water, such that the filtration performance can be restored in a short time.

Filter media made from paper can be used in the context of gas and liquid filtration. Conventionally, these filter media generally comprise a base filter paper (e.g., cellulose-based paper) which is hydrophilic. Therefore, in order to achieve desirable hydrophobicity and reduced water absorption the paper is typically impregnated with hydrophobic agents. These hydrophobic agents penetrate into the base paper, coating the hydrophilic paper fibres to form a hydrophobic fibre layer at the surface of (or, in some cases, throughout) the filter medium. This imparts a resistance to, or ability to avoid, wetting/absorption of the paper by water.

To improve filtration performance and efficiency, the surface area of filter media such as filter paper can be increased through corrugation or pleating, producing corrugated filter medium. This corrugation may also increase the stiffness of the filter medium, preventing the medium from deforming, collapsing in the fluid stream and degrading, particularly when in use. However, in the case of hydrophobic filter paper, the present inventors found that when it is corrugated it can become less hydrophobic and allow the ingress of water (i.e., increased water-absorption). This can compromise the filtration performance and structural integrity of the filter medium.

It is therefore desirable to produce a hydrophobic filter medium which maintains hydrophobicity when corrugated, embossed, and/or pleated (i.e., does not readily absorb water). It is also desirable that the filter medium when corrugated (i.e., the corrugated filter medium) does not deteriorate when exposed to water for extended periods of time. There is also a desire for the filter medium and corrugated filter medium to be producible with materials and by a process which can reduce overall cost of manufacture.

### Summary of Invention

In a first aspect, there is provided a filter medium comprising:
a nonwoven layer, the nonwoven layer having been treated with a sizing agent, and then treated with a hydrophobic, stiffening binder resin, and then optionally corrugated.

In a second aspect, there is provided a method of producing a filter medium, the method comprising:
providing a nonwoven layer having been treated with a sizing agent, treating the nonwoven layer with a hydrophobic, stiffening binder resin to form the filter medium, and optionally then corrugating the filter medium to form a corrugated filter medium.

In a third aspect, there is provided a filter element comprising the filter medium of the first aspect.

*The invention may be described further by the following non-limiting embodiments:*
In some embodiments, there is provided a corrugated filter medium comprising:
a nonwoven layer, the nonwoven layer having been treated with a sizing agent, and then impregnated with a hydrophobic, stiffening binder resin, and then corrugated.

In some embodiments, there is provided a filter medium comprising:
a nonwoven layer, the nonwoven layer having been treated with a sizing agent, and then impregnated with a hydrophobic, stiffening binder resin, and optionally then corrugated to form a corrugated filter medium.

In another aspect, there is provided a method of producing a corrugated filter medium, the method comprising:
providing a nonwoven layer having been treated with a sizing agent, impregnating the nonwoven layer with a hydrophobic, stiffening binder resin,
and then corrugating the nonwoven layer to form the corrugated filter medium.

In another aspect, there is provided a method of producing a filter medium, the method comprising:
providing a nonwoven layer having been treated with a sizing agent, impregnating the nonwoven layer with a hydrophobic, stiffening binder resin,
and optionally then corrugating the nonwoven layer to form the corrugated filter medium.

In another aspect, there is provided a filter element comprising the corrugated filter medium.

In some embodiments, there is provided a corrugated filter medium comprising:
a base paper, the paper having been treated with a sizing agent, and then impregnated with a hydrophobic, stiffening binder resin, and then corrugated.

In some embodiments, there is provided a method of producing a corrugated filter medium, the method comprising:
providing a base paper having been treated with a sizing agent, impregnating the base paper with a hydrophobic, stiffening binder resin,
and then corrugating the base paper to form the corrugated filter medium.

In some embodiments, there is provided a filtration device comprising the corrugated filter medium.

In some embodiments, there is provided a filter medium, wherein the filter medium is a fuel filter, oil filter, air filter, or an electric discharge filter.

In some embodiments, there is provided a corrugated filter medium, wherein the corrugated filter medium is a fuel filter, oil filter, air filter, or an electric discharge filter.

Filter papers are often impregnated with a binder resin, which acts to both stiffen and impart hydrophobic properties to the paper. This helps them keep their physical form when the paper is corrugated, embossed, or pleated. Such binder resins include phenolic, epoxy, acrylic resins, and latex. The present inventors have found that when paper is corrugated, the integrity of the impregnated resin coating sometimes deteriorates when the three-dimensional structure (corrugated filter) is formed, resulting in exposure of the hydrophilic fibres (e.g., cellulose fibres) within the base filter paper to water, increasing the water absorption (relative to comparable flat filter media). In other words, upon corrugation, pleating, or embossing of the filter paper, the resin can crack on the folds/corrugations/embossments which allows water ingress into the paper, leading to poorer structural and filtration properties. The present inventors have found a way to address this by treating the paper first with a sizing agent, and then applying a stiffening, hydrophobic binder resin, and optionally then corrugating. This results in a filter paper which, after corrugation, pleating, or embossing, can avoid or minimise water-ingress, whilst still allowing the paper to maintain its structural and filtration properties. The filter media of the present disclosure may have good resistance to water absorption and good filtration properties, even after corrugation, pleating, or embossing. The filter paper may be produced without the need for expensive additives or a high content of additives. The filter paper may further be produced efficiently using standard paper making techniques and apparatus known to those skilled in the art. The present inventors found that the filter media of the present disclosure are suitable for use in liquid and gas filter elements as in fuel filters, oil filters, air filters (such as gas turbine filters), and electric discharge filters. They also found that the corrugated filter media of the present disclosure (i.e., the filter media after corrugation) are suitable for use in liquid and gas filter elements such as in fuel filters, oil filters, air filters, and electric discharge filters.

The present inventors found that the filter medium can be enhanced further by treating the nonwoven layer with the hydrophobic, stiffening binder resin in the presence of a wetting agent. The wetting agent was found to improve penetration of the binder resin into the base paper. By treating in the presence of a wetting agent, it may ensure that the binder resin is present throughout the filter medium rather than primarily on the surface of the filter medium as a surface coating.

### Detailed Description

The present disclosure provides the aspects and embodiments mentioned above. Optional and preferred features of the various aspects are described below. Unless otherwise stated, any optional or preferred feature may be combined with any other optional or preferred feature, and with any of the aspects of the invention mentioned herein.

It is noted that when discussing the product, method, or the devices of the present disclosure, each of these discussions can be considered applicable to other examples whether or not they are explicitly discussed in the context of that example. Thus, for example, in discussing a component related to the method, such disclosure is also relevant to and directly supported in context of the product, and *vice versa.*

### Definitions

The terms used in this specification generally have their ordinary meanings in the art, within the context of this disclosure and in the specific context where each term is used. Certain terms are discussed below, or elsewhere in the specification, to provide additional guidance in describing the compositions and methods of the disclosure and how to make and use them.

As used herein, the terms "about" or "approximately" means within an acceptable error range for the particular value as determined by one of ordinary skill in the art, which will depend in part on how the value is measured or determined, i.e., the limitations of the measurement system. For example, "about" can mean within three or more than three standard deviations, per the practice in the art. Alternatively, "about" can mean a range of up to 20%, preferably up to 10%, more preferably up to 5%, and more preferably still up to 1% of a given value. Also, particularly with respect to systems or processes, the term can mean within an order of magnitude, preferably within five-fold, and more preferably within two-fold, of a value.

Wt% herein, unless otherwise specified is w/w%.

A "corrugated" filter medium as used herein refers to a filter medium which has alternating ridges/peaks and troughs/grooves. Corrugated filter medium, such as corrugated filter paper, have a plurality of folds which creates a ridged-like structure. Corrugated filter medium may also be termed as fluted filter medium or pleated filter medium.

The term "base paper" as used herein refers to a material produced by mechanically, thermally and/or chemically processing fibrous materials (e.g., cellulose) into a thin sheet. The base paper may be or may comprise a nonwoven layer. The fibres may be derived from numerous sources including, but not limited to, wood pulp, plants, cotton, linen, cotton linters, sulphate pulps, synthetic fibres, inorganic fibers such as glass fibers or combinations thereof. The base paper may comprise additives such as sizing agents or wet strength agents to impart desired properties on the base paper such as, for example, rigidity, hydrophobicity, and pore size. According to the present disclosure, the filter medium comprises the base paper and the hydrophobic, stiffening binder resin. The "base paper" as used herein refers to a material that does not comprise the hydrophobic, stiffening binder resin. Instead, the base paper is treated with the hydrophobic stiffening binder resin to form the filter medium. In other words, the term base paper may refer to a material which comprises a fibrous material and a sizing agent, before it has been treated with the hydrophobic, stiffening binder resin.

The term "hydrophobic" as used herein refers to a lack of affinity for water, a repulsion of water, or a failure to absorb water. Hydrophobic as used herein described the water-resistant properties of a material. A hydrophobic surface is a surface which has a low surface energy which water resides on the surface as discrete droplets. In contrast, a hydrophilic (water-loving) surface has a high free surface energy thereby enabling water to cover the surface as a film. A hydrophobic material refers to a material that has hydrophobic properties. A hydrophobic substance, agent, or additive refers to a substance, agent, or additive that imparts hydrophobicity to the material in which it is added to, applied to, or incorporated into. For example, a hydrophobic agent can be added to, applied to, impregnated to, or incorporated into a base paper to impart hydrophobic character to the paper (i.e., increase the resistance to water absorption). Hydrophobicity can be determined by measuring the contact angle (CA) between a substrate surface and a surface of pure water.

The term "hydrophilic" as used herein refers to the affinity for water, an attraction of water, or an ability to absorb water. A hydrophilic material refers to a material that has hydrophobic properties. A hydrophilic substance or additive refer to a substance or additive that imparts hydrophilicity to a material in which it is added to or incorporated into. Hydrophilicity can be determined by measuring the contact angle (CA) between a substrate surface and a surface of pure water.

Hydrophobicity and hydrophilicity can be determined by measuring the contact angle (CA) between a substrate surface and a surface of pure water. The contact angle may be measured using techniques known to the skilled person, such as by optical methods, e.g. as set out in ISO/TS 14778:2021. The interactions between the liquid and the solid phases influences the contact angle. Contact angles above 90° define a situation where the liquid is repelled by the solid; below 90° defines a situation of attraction where the liquid wets the surface. The magnitude above or below 90° shows the relative degree of repulsion or attraction between the two phases. Therefore, as used herein a hydrophobic substance has a water contact angle of greater than or equal to 90° and a hydrophilic substance has a water contact angle of less than 90°.

The term "sizing agent" as used herein refers to a substance that is applied to, or incorporated into a material (e.g., cellulose-based paper) in order to alter the properties of the material. These properties can include, but are not limited to, hydrophobicity and hydrophilicity (i.e., water absorption), liquid absorption, wear characteristics, burst strength, abrasiveness, smoothness, and porosity; in the present context, the base paper is made more hydrophobic by treatment with the sizing agent, although it may also impart at least some of the other properties. "Sizing agents" as referred to herein may be "internal sizing agents" or "surface sizing agents". Internal sizing agents are generally added with the pulp fibres constituting the paper during the formation of the base paper (i.e., in the wet end of the paper making process). Therefore, internal sizing agents typically penetrate throughout the base paper, coating the fibres of the base paper.

Surface sizing agents are generally added to the surface of the base paper after sheet formation. Therefore, surface sizing agents typically form a film on the surface of the base paper and do not penetrate throughout the base paper.

The term "hydrophobic, stiffening binder resin" as used herein refers to a resin which can be applied to a filter medium (e.g., cellulose-based filter paper) to alter the properties of the paper, mainly increasing hydrophobicity and stiffness. Paper stiffness is the ability for a sheet of paper to resist bending and is also influenced by the thickness and basis weight of the sheet. Stiffness can be measured using techniques known to the skilled person, such as laid out in DIN 53121: 2014-08.

The term "wetting agent" as used herein refers to a substance, chemical, or additive which reduces the interfacial tension in a base paper to improve spreading and/or penetration of a resin system. According to the present disclosure, wetting agents can be applied to aid the treatment (for example impregnation) of a further additive to a base paper.

The term "wet-strength agent" as used herein refers to a substance, chemical, or additive which provides wet-strength to a base paper (i.e., a substance which increases the ability for the fibres holding the paper together to resist rupturing when a force is applied to wet paper). Wet-strength agents may improve the tensile properties of the paper in both wet and dry condition, by cross-linking the cellulose fibres with covalent bonds that do not break upon wetting. Examples of wet-strength agents include, but are not limited to, urea resins, urea-formaldehyde, melamine resins, melamine-formaldehyde, and polyamide-epichlorohydrin.

Various standard methods for measuring properties (e.g. ASTM, ISO, DIN, TAPPI) may be mentioned herein. Unless otherwise stated, the standard to be used is the most recent before the filing date of the present application.

### Filter medium

In a first aspect, there is provided a filter medium comprising:
a nonwoven layer, the nonwoven layer having been treated with a sizing agent, and then treated with a hydrophobic, stiffening binder resin, and then optionally corrugated.

According to the present disclosure, the filter medium comprises a nonwoven layer. In some embodiments, the nonwoven layer is or comprises a base paper. The features described for the base paper apply equally to the nonwoven layer.

The base paper is typically formed from pulp. Pulp is a fibrous material prepared from raw materials by chemically, thermally, and/or mechanically separating the fibres in the raw materials (e.g., cellulose fibres). This may be achieved by a cooking process in, for example, tanks at a pulp mill. The pulp may be in the form of a bale, for example, a flash dried bale or a sheeted bale.

The pulp, which may be in the form of flash a dried bale or a sheeted bale, may then be mixed with water in, for example, a pulper. The pulp can be made into a base paper in a paper making machine. The paper making machine may have the following sections - a wire section, a pressing section, and a drying section. In the wire section, the pulp is applied to a forming fabric (also called a wire) to allow the water from the pulp to drain through. The wire may be an inclined wire. In the wire section, some of the water in the pulp passes through the forming fabric leaving a wet fibrous layer comprising the pulp raw materials (e.g., a cellulose layer) on the forming fabric. In some cases, the water passes through the forming fabric under gravity or, in some cases, under application of a vacuum. In some cases, the forming fabric is an inclined wire and the water passes through the forming fabric under the application of a vacuum. During the press section, the fibrous layer comprising the pulp raw materials may be passed between one or more pairs of rollers, optionally two or more, optionally three or more pairs of rollers. This process may also be termed nipping. For air and oil filtration grade filter media, the paper is typically not nipped. For fuel filtration grade filter media, the paper is typically nipped. This process presses more of the water from the fibrous layer comprising the pulp raw materials. In some examples, the press section one pair of rollers. The press section may be double felted. In the dryer section, heat is applied to the fibrous layer to effect evaporation of water. The heat may be applied by heated rollers, sometimes termed dryer drums or cans. The fibrous layer may additionally be dried in the dryer section with through air drying (TAD). In TAD, heated gas (e.g., air) is passed through the fibrous layer, typically by suction. TAD can achieve high evaporation rates. In some example, both heated rollers and TAD are used. The heat applied by the rollers and/or by TAD may also cure any additives added to the paper in previous steps, including internal sizing agents and wet-strength agents.

The pulp which is used to form the base paper may comprise a fibrous material which may comprise cellulose, for example alpha-cellulose. The pulp may have been prepared from a source selected from plants, cotton, wood, hardwood, softwood, linen, cotton linters, hemp, straw, jute, flax, esparto, sulphate pulps, synthetic fibres, and mineral fibres.

The base paper may comprise fibres. The base paper may comprise cellulose fibres, for example alpha-cellulose fibres. The cellulose fibres may be derived from sources selected from, but not limited to, plants, cotton, wood, hardwood, softwood, linen, cotton linters, hemp, straw, jute, flax, esparto, sulphate pulps, synthetic fibres, and mineral fibres. The base paper may comprise hydrophilic fibres. The base paper may have been produced from materials derived from plants, cotton, wood, hardwood, softwood, linen, cotton linters, hemp, straw, jute, flax, esparto, sulphate pulps, synthetic fibres, and mineral fibres.

The cellulose fibres may comprise only one or multiple different types of cellulose fibre (which can also be fibrillated), for example, a combination of hardwood fibres and softwood fibres. The cellulose fibres may comprise only one type of cellulose fibre. The cellulose fibres may comprise multiple different types of cellulose fibre, for example, a combination of hardwood fibres and softwood fibres. The cellulose fibres may be fibrillated. The softwood fibres may be derived from a wood selected from pine (e.g., longleaf pine, shortleaf pine, loblolly pine, slash pine, or Southern pine), Jack pine, balsam fir, Douglas fir, western hemlock, redwood, red cedar, northern softwood, southern softwood, hemlock and spruce (e.g., black spruce or white spruce). The softwood fibres may be from a Northern Bleached Softwood kraft (NBSK) pulp. The hardwood fibres may be derived from aspen, birch, beech, oak, maple, eucalyptus or gum.

The base paper may comprise cellulose fibres. The base paper may comprise cellulose fibres and synthetic fibres. In some examples, the synthetic fibres may be selected from polymeric fibres and inorganic fibres.

The polymeric fibres may comprise a material selected from a polyester, a polycarbonate, a polyamide, a polyaramid, a polyimide, a polyolefin, a polyether ether ketone, a polyolefin, a polyacrylic, a polyvinyl alcohol, a polyacrylonitrile, a polyvinylidene fluoride (PVDF), polylactic acid (PLA), polyether sulfone, copolymers thereof, or combinations thereof. The polyester may be selected from polyethylene terephthalate, polybutylene terephthalate or a combination thereof. The polyamide may be a nylon. The polyolefin may be selected from polyethylene, polypropylene or a combination thereof. In some examples, the polymeric fibres may be selected from polyester fibres, polyacrylic fibres or combinations thereof. In some examples, the polymeric fibres may comprise polyester fibres. In some examples, the polymeric fibres may be polyethylene terephthalate fibres. The polymeric fibres are preferably polyester fibres.

In some embodiments, the base paper comprises synthetic fibres. The synthetic fibres may be or may comprise polymeric fibres. The polymeric fibres are preferably polyester fibres. The polyester fibres may have a titre of from about 0.05 dtex to about 10 dtex, optionally about 0.075 dtex to about 8 dtex, optionally about 0.1 dtex to about 5 dtex, optionally about 0.15 dtex to about 4 dtex, optionally about 0.2 dtex to about 3 dtex, as measure by ASTM D1577-07(2018). According to the present disclosures, titre can be defined as the average linear density of fibres.

The synthetic fibres may have a titre of from about 0.05 dtex to about 10 dtex, optionally about 0.075 dtex to about 8 dtex, optionally about 0.1 dtex to about 5 dtex, optionally about 0.15 dtex to about 4 dtex, optionally about 0.2 dtex to about 3 dtex, as measure by ASTM D1577-07(2018).

The inorganic fibres may comprise a material selected from glass, carbon, ceramic, silica or a combination thereof. In some examples, the inorganic fibres may comprise glass fibres.

In some embodiments, the base paper comprises mineral fibres. The mineral fibres may be or may comprise inorganic fibres. The mineral fibres are preferably glass fibres. The glass fibres may have a diameter of from about 100 nm to about 5000 nm, optionally about 200 nm to about 4000 nm, optionally about 300 nm to about 3000 nm, optionally about 400 nm to about 2500 nm, optionally about 500 nm to about 2000 nm, preferably about 600 nm to about 1500 nm.

The mineral fibres may have a diameter of from about 100 nm to about 5000 nm, optionally about 200 nm to about 4000 nm, optionally about 300 nm to about 3000 nm, optionally about 400 nm to about 2500 nm, optionally about 500 nm to about 2000 nm, preferably about 600 nm to about 1500 nm.

The fibre diameter may be measured using a scanning electron microscope. Using a scanning electron microscope, images are taken at a defined magnification. These are measured using automatic software. Measuring points that capture crossing points of fibres and thus do not represent the fibre diameter are removed manually. Fibre bundles are generally evaluated as one fibre. The scanning electron microscope used to measure fibre diameter may be a Phenom Fei with associated software Fibermetric V2.1. The following method can then be used to determine the fibre diameter:
1. The material is sampled at 5 points across web width (at 1.8 m).
2. The following recordings are conducted:
   a. Sputter the sample;
   b. Random recording on the basis of optical image, the spot thus found is recorded with 1000-fold magnification by means of SEM.
   c. Fibre diameter determination via "one click" method, each fibre must be recorded once;
   d. Average value and fibre diameter distribution is evaluated by the data obtained from Fibermetric using Excel. Thus, the average fibre diameter is recorded at at least five points per nonwoven. The five average values are combined into one average value. This value is called the average fibre diameter of the nonwoven. At least 500 fibres are evaluated.

In some embodiments the nonwoven layer is or comprises a nonwoven fabric. Nonwoven fabrics are understood to be any materials that are made up of finite or continuous fibres. They differ from woven materials in their random, disorganised fibre orientation. A nonwoven fabric may be defined as a fibrous material where the fibres are held together by strong chemical bonding agents, the melting of adjacent fibres (i.e., thermal bonding), and/or the mechanical intertwining of filaments. The nonwoven fabric may be an air-laid nonwoven, dry-laid nonwoven, wet-laid nonwoven, meltblown nonwoven, spunbonded nonwoven, or spunlace nonwoven. The nonwoven layer may be a wet-laid nonwoven. Wet-laid nonwovens according to the present disclosure are nonwovens that can be manufactured in any wet-laying processes known to those skilled in the art.

The features of the base paper apply equally to the features of the nonwoven layer and *vice versa.*

The raw materials constituting the base paper (i.e., the raw materials excluding water and chemical additives such as, but not limited to, sizing agents, wet-strength agents, and resins) may have a cellulose content of at least about 40 wt%, optionally at least about 50 wt%, optionally at least about 60 wt%, optionally at least about 70 wt%, optionally at least about 80 wt%, optionally at least about 90 wt%, optionally at least about 95 wt%, optionally about 100 wt%.

The base paper may have a cellulose content of at least about 40 wt% based on the solids content of the base paper (i.e., the content of solids in the base paper, excluding water, but including any chemical additives such as, for example. Wet-strength agents and sizing agents), optionally at least about 50 wt%, optionally at least about 60 wt%, optionally at least about 70 wt%, optionally at least about 80 wt%, optionally at least about 90 wt%, optionally at least about 95 wt%. The base paper may be substantially free of impurities such as oxy- and hydrocelluloses, ether solubles, and pentosans, as these may leach from the filter paper during operation.

In some embodiments, the base paper may have a cellulose content of at least about 40 wt% based on the solids content of the base paper excluding any additives (i.e., the raw materials of the base paper only, excluding water), optionally at least about 50 wt%, optionally at least about 60 wt%, optionally at least about 70 wt%, optionally at least about 80 wt%, optionally at least about 90 wt%, optionally at least about 95 wt%, optionally about 100 wt%.

In some embodiments, the raw materials constituting the base paper may comprise glass fibres. In some embodiments, the raw materials constituting the base paper may comprise polyester fibres. In some embodiments, the raw materials constituting the base paper may comprise glass fibres and polyester fibres. In some embodiments, the raw materials constituting the base paper may consist of glass fibres.

In some embodiments, the base paper may comprise a glass fibres content of at least about 50 wt% based on the solids content of the base paper excluding any additives (i.e., the raw materials of the base paper only, excluding water), optionally at least about 60 wt%, optionally at least about 70 wt%, optionally at least about 80 wt%, optionally at least about 90 wt%, optionally at least about 95 wt%, optionally about 100 wt%.

In some embodiments, the base paper may comprise a polyester fibre content of less than about 50 wt% based on the solids content of the base paper excluding any additives (i.e., the raw materials of the base paper only, excluding water), optionally less than about 40 wt%, optionally less than about 30 wt%, optionally less than about 25 wt%, optionally less than about 20 wt%, optionally less than about 10 wt%, optionally less than about 5 wt%.

In some embodiments, the base paper may comprise a glass fibre content of from about 50 wt% to about 100 wt% and a polyester fibre content of from about 0 wt% to about 50 wt% based on the solids content of the base paper excluding any additives (i.e., the raw materials of the base paper only, excluding water), optionally about 60 wt% to about 100 wt% glass fibres and about 0 wt% to about 40 wt% polyester fibres, optionally about 65 wt% to about 100 wt% glass fibres and about 0 wt% to about 35 wt% polyester fibres, optionally about 70 wt% to about 100 wt% glass fibres and about 0 wt% to about 30 wt% polyester fibres, optionally about 75 wt% to about 100 wt% glass fibres and about 0 wt% to about 25 wt% polyester fibres, optionally about 80 wt% to about 100 wt% glass fibres and about 0 wt% to about 20 wt% polyester fibres, optionally about 90 wt% to about 100 wt% glass fibres and about 0 wt% to about 10 wt% polyester fibres.

According to the present disclosure, the filter medium comprises a base paper which has been treated with a sizing agent. The present inventors found that after corrugating, pleating, notching, or embossing a filter paper comprising a hydrophobic, stiffening binder resin, without a sizing agent, the water absorption of the filter paper increased (i.e., the filter paper became less hydrophobic). Without wishing to be bound to a particular theory, the present inventors believe that the integrity of the hydrophobic coating imparted by the hydrophobic, stiffening binder resin on the hydrophilic fibres of the base paper (e.g., cellulose fibres) is lost during corrugation. As a result, the hydrophilic fibres within the base paper become exposed and therefore the filter medium has increased water absorption (relative to comparable flat filter paper). Unexpectedly, the inventors found that the addition of a sizing agent to the base paper and then treating with a hydrophobic, stiffening binder resin ensured that the filter medium remains hydrophobic even after the filter medium is corrugated, pleated, or embossed (i.e., the water absorption of the filter paper does not significantly alter upon corrugation). The base paper may have been treated with the hydrophobic, stiffening binder resin by impregnation. The base paper may have been impregnated with the hydrophobic, stiffening binder resin.

The sizing agent can be added to the base paper to impart properties such as increased hydrophobicity and stiffness. The sizing agent may be added in the pulper. The sizing agent may be added before or after refining of the raw materials which constitute the base paper. The base paper may be formed with the sizing agent present in the pulp material in order to achieve an even coverage of the sizing agent on to hydrophilic fibres of the base paper.

The sizing agent may be added as an emulsion, preferably an aqueous emulsion. The sizing agent may be added as an alkaline aqueous emulsion (i.e., the emulsion is at a pH of greater than 7.0). The sizing agent may be added as an acidic aqueous emulsion (i.e., the emulsion is at a pH of less than 7.0). The pH of the emulsion may be neutral. An alkaline sizing agent is a sizing agent that may be applied in an alkaline aqueous emulsion. An acidic sizing agent is a sizing agent that may be applied in an acidic aqueous emulsion. Preferably, the sizing agent is added as an alkaline aqueous emulsion at a pH of at least 7.0.

Application of the sizing agent in an alkaline aqueous emulsion may result in the hydroxyl groups of the fibres in the base paper (e.g., hydroxyl groups on the cellulose of the base paper) reacting directly with the sizing agent to form a fibre surface that is coated with the sizing agent. This process is typically more efficient at an alkaline pH for alkaline sizing agents. The pH of the emulsion may be greater than about 7.0, optionally greater than about 7.5, optionally greater than about 8.0, optionally greater than about 8.5, optionally greater than about 9.0.

The sizing agent is typically a hydrophobic sizing agent. The sizing agent may be an alkaline sizing agent. The sizing agent may be an alkaline sizing agent selected from alkyl ketene dimer (AKD), alkenyl ketene dimer, and an alkenylsuccinic anhydride. The sizing agent may be an acidic sizing agent such as, but not limited to, rosin. The sizing agent may be selected from alkyl ketene dimer (AKD), alkenyl ketene dimer, an alkenylsuccinic anhydride, stearic anhydride, rosin, silicones, fluorochemicals, resins, polyolefin emulsions, natural waxes, synthetic waxes, and latex. The sizing agent may be selected from AKD, alkenylsuccinic anhydride, stearic anhydride, rosin, and silicones. The sizing agent is preferably alkyl ketene dimer or a derivative thereof. The sizing agent is preferably alkyl ketene dimer.

The sizing agent preferably has high sizing efficiency. The sizing agent may or may not require curing. It is preferable that the time for curing is minimised for efficiency. The curing of the sizing agent may occur at elevated temperatures, such as those used during the drying of the paper. Curing of the sizing agent may not be required.

The sizing agent may be present in the base paper in an amount of from about 0.05 wt% to about 5 wt% based on the total solid content weight of the base paper (i.e., the weight of the base paper excluding water and without treatment with the hydrophobic, stiffening binder resin), optionally of from about 0.1 wt% to about 4 wt%, optionally of from about 0.1 wt% to about 3 wt%, optionally of from about 0.5 wt% to about 3 wt%, optionally of from about 1 wt% to about 3 wt%. Preferably, the sizing agent may be present in the base paper in amount of about 2 wt%. The sizing agent may be present in the base paper in amount of less than about 5 wt%, optionally less than about 4 wt%, optionally less than about 3.5 wt%, optionally less than about 3 wt%.

The sizing agent may be present in the filter medium in an amount of from about 0.05 wt% to about 5 wt% based on the total weight of the filter medium, optionally of from about 0.1 wt% to about 4 wt%, optionally of from about 0.1 wt% to about 3 wt%, optionally of from about 0.5 wt% to about 3. Preferably, the sizing agent may be present in the filter medium in amount of from about 1 wt% to about 3 wt%. The sizing agent may be present in the base paper in amount of less than about 5 wt%, optionally less than about 4 wt%, optionally less than about 3 wt%.

According to the present disclosure, the filter medium comprises a base paper, the paper having been treated with a sizing agent, and then treated with a hydrophobic, stiffening binder resin. The hydrophobic, stiffening binder resin may have been treated by impregnation (i.e., the resin is impregnated).

The paper is treated with a hydrophobic, stiffening binder resin. The hydrophobic, stiffening binder resin may have been treated by methods known those skilled in the art. For example, the hydrophobic, stiffening binder resin may have been impregnated. "Impregnated" may indicate that the hydrophobic, stiffening binder resin is distributed, preferably homogenously, throughout the depth of the paper. Impregnating may differ from coating in that coating a substance on the paper will typically result in the substance being predominantly present on the side it is coated, and not homogenously throughout the depth of the paper. Alternatively, impregnation may be asymmetric impregnation, wherein the fibrous layer is impregnated with two different types of additives i.e., the fibrous layer has two sides, a first and second side, with the first side having been impregnated with a first additive and the second side having been impregnated with a second additive, and first and second additives are different to one another.

Treatment with the hydrophobic, stiffening binder resin may have been achieved by applying the resin in a liquid to the base paper. The solution comprising the hydrophobic, stiffening binder resin which is applied to the paper may also be termed the impregnation solution. The impregnation solution may also be termed a saturation solution. The liquid in which the resin is applied with may comprise organic solvent or an aqueous solvent. The organic solvent may comprise an alcohol. The organic solvent may be, for example, selected from methanol, ethanol, iso-propanol, or combinations thereof. The organic solvent is preferably methanol. The hydrophobic, stiffening binder resin may have been applied in an aqueous emulsion comprising the hydrophobic, stiffening binder resin. Impregnation of the base paper may occur when the base paper is dry. Impregnation may have been achieved by immersing the base paper into a solution comprising the hydrophobic, stiffening binder resin followed by drying of the paper (i.e., evaporation of the solvent) by either air drying, heat drying, or vacuum drying, or combinations thereof.

The impregnation solution may be contacted with the base paper by any suitable process, for example, dip-impregnation, size-press impregnation, double-sided roller application and double-sided spraying. The impregnation solution may be contacted with the base paper from both surfaces of the base paper simultaneously or sequentially.

Treatment with the hydrophobic, stiffening binder resin may have been achieved by immersion of the paper into the impregnation solution comprising the resin for a period of time required to achieve a desired level of impregnation. Longer time periods may aid penetration of the binder resin throughout the paper, however, it is desirable to minimise the time required for impregnation for reasons of efficiency.

Treatment with the hydrophobic, stiffening binder resin may have been achieved by drop coating, where the impregnation solution is dropped onto the paper and then the paper dried to leave behind the binder resin.

The treated hydrophobic, stiffening binder resin may be covalently bound to the paper such that it is not washed off during use. The binder resin may have been cured after addition to the paper in order to form covalent bonds with the fibres of the paper or between the molecules of the resin. Curing the binder resin may be required and can occur at elevated temperatures, either during the drying stage or a separate curing stage. The paper may have been dried, after addition of the binder resin, at a temperature of greater than about 50 °C, optionally greater than about 60 °C, optionally greater than about 70 °C, optionally greater than about 80 °C, optionally greater than about 90 °C, optionally greater than about 100 °C. The temperature of drying may have been from about 50 °C to about 120 °C, optionally from about 50 °C to about 110 °C, optionally from about 60 °C to about 100 °C, optionally from about 65 °C to about 80 °C, optionally about 70 °C.

The treated paper may further be cured either after drying or after conversion of the medium (where conversion of the medium is, for example, but not limited to, pleating, corrugating, embossing, or having been incorporated into a filter element). Curing of the binder resin may occur at a temperature of greater than about 100 °C, optionally greater than about 120 °C, optionally greater than about 150 °C, optionally greater than about 170 °C, optionally greater than about 185 °C, optionally greater than about 200 °C. Curing of the binder resin may occur at a temperature from about 50 °C to about 300 °C, optionally from about 50 °C to about 275 °C, optionally from about 60 °C to about 250 °C, optionally from about 70 °C to about 225 °C, optionally from about 70 °C to about 200 °C.

The hydrophobic, stiffening binder resin may be selected from an acrylic resin, phenolic resin, epoxy resin, a silicone resin, acryl nitril, acryl nitril butadiene styrol, acryl nitril styrol acrylate, ethylene-vinyl acetate (EVA), styrene butadiene rubber (SBR), rosin resin, polyvinyl chloride resin, polyvinylidene chloride resins, and polyvinylidene fluoride resins. The hydrophobic, stiffening binder resin is preferably an acrylic resin. The hydrophobic, stiffening binder resin is preferably styrol acrylate.

Epoxy resins may also be termed polyepoxides. The epoxy resin may be a class of reactive prepolymers and polymers which contain at least two epoxide groups. The epoxy resin monomers may be formed by the reaction of an alcohol with an epihalohydrin to form a glycidyl-based epoxy resin. The epoxy resin may comprise a diglycidyl ether. The epoxy resin may comprise a diglycidyl ether formed by the reaction of a diol with an epihalohydrin.

Acrylic resins may be derived from acrylic acid monomers and derivates of acrylic acid including but not limited to esters, nitriles, and amides. The monomers may be acrylic acid, methacrylic acids, acrylate, and derivatives thereof. Acrylic resins may be formed by polymerisation of the monomers *via* reaction at the ethylenic double bond. Polymerisation may be initiated by free radicals.

Phenolic resins may be resins formed from the reaction between phenols and aldehydes, producing either novolacs or resoles. The phenols may be substituted phenols. The aldehyde may be formaldehyde.

The hydrophobic, stiffening binder resin may be added to the paper in a solution comprising the resin (i.e., the impregnation solution). The solution may further comprise additives such as buffers, further resins, wet-strength agents, wetting agents, waxes, oils, emulsions, and salts. These additives can have the effect of, for example, further reducing the surface energy of the paper (i.e., increase hydrophobicity), or improving impregnation of the binder resin.

The hydrophobic stiffening binder resin may be present in the impregnation solution in an amount of from about 0.5 wt% to about 30 wt% based on the total weight of the impregnation solution, optionally of from about 1 wt% to about 25 wt%, optionally of from about 5 wt% to about 22 wt%, optionally of from about 10 wt% to about 20 wt%, optionally about 15 wt%.

The hydrophobic, stiffening binder resin may be present in the filter medium in an amount of at least about 5 wt% based on the total weight of the saturated filter medium, optionally at least about 6 wt%, optionally at least about 8 wt%, optionally at least about 10 wt%, optionally at least about 15 wt%. The hydrophobic, stiffening binder resin may be present in the filter medium in an amount of from about 5 wt% to about 30 wt% based on the total weight of the saturated filter medium, optionally from about 7 wt% to about 28 wt%, optionally from about 8 wt% to about 25 wt%, optionally from about 9 wt% to about 22 wt%, optionally about 10 wt% to about 20 wt%, optionally about 15 wt%.

The saturated filter medium refers to the filter medium which has been treated with the hydrophobic, stiffening binder resin, then dried (i.e., any solvent is removed). In other words, the saturated filter medium is the dried filter medium which comprises the base paper (wherein the base paper comprises the raw materials of the base paper and the sizing agent), the hydrophobic, stiffening binder resin, and any other additives (for example, wet-strength agents and wetting agents).

The inventors of the present disclosure found that the use of a wetting agent may aid the penetration of the hydrophobic, stiffening binder resin into the paper and therefore (counterintuitively) increase hydrophobicity of the paper. Furthermore, the wetting agents can reduce the amount of time required for full penetration of the binder resin, therefore making the process more time and cost efficient. Therefore, the impregnation solution may comprise the hydrophobic stiffening binder resin and a wetting agent.

The wetting agent may comprise a surfactant. The wetting agent may comprise a surfactant selected from an anionic, cationic, amphoteric, or non-ionic surfactant. The wetting agent is preferably a non-ionic surfactant. The wetting agent may comprise an organic surfactant. The wetting agent may comprise a non-ionic organic surfactant. The wetting agent may comprise an anionic surfactant comprising a sulfonate, phosphate, sulfate, or carboxylate headgroup. The wetting agent may be a sulfosuccinate-based anionic surfactant. The wetting agent may comprise an alcohol alkoxylate surfactant. The wetting agent may be substantially free of silicone. It was found that treating (for example by impregnation) the base filter paper with an impregnation solution comprising a hydrophobic, stiffening binder resin and a non-ionic organic surfactant based wetting agent resulted in most effective penetration (and therefore impregnation) of the paper.

The wetting agent may be present in the impregnation solution in an amount of from about 0.001 wt% to about 3 wt% based on the total weight of the impregnation solution, optionally from about 0.005 wt% to about 2.5 wt%, optionally from about 0.01 wt% to about 2 wt%, optionally from about 0.01 wt% to about 1.5 wt%, optionally from about 0.02 wt% to about 1 wt%, optionally about 0.03 wt% to about 0.08 wt%, optionally about 0.04 wt%.

The wetting agent may be present in the impregnation solution in a weight ratio of the hydrophobic, stiffening binder resin to wetting agent of from about 10:1 to about 2000:1, optionally from about 100:1 to about 1000:1, optionally about 200:1 to about 750:1, optionally about 300:1 to about 600:1.

The wetting agent may be present in the filter medium in an amount of from about 0.001 wt% to about 3 wt% based on the total weight of the hydrophobic, stiffening binder resin that is present in the filter medium, optionally from about 0.003 wt% to about 2.5 wt%, optionally from about 0.005 wt% to about 2 wt%, optionally from about 0.01 wt% to about 1 wt%, optionally from about 0.05 wt% to about 0.6 wt%, optionally about 0.1 wt% to about 0.3 wt%, optionally about 0.2 wt%.

The wetting agent may be present in the filter medium in an amount of from about 0.00015 wt% to about 1.5 wt% based on the total weight of the filter medium, optionally from about 0.0002 wt% to about 1 wt%, optionally from about 0.0005 wt% to about 0.5 wt%, optionally from about 0.001 wt% to about 0.25 wt%, optionally from about 0.002 wt% to about 0.1 wt%, optionally from about 0.01 wt% to about 0.05 wt%, optionally about 0.035 wt%.

The base paper may further comprise a wet strength agent. Wet strength agents may be added to the base paper in order to provide wet strength (i.e., improve the ability of the fibres holding the paper together to resist force of rupture when the paper is wet). The wet strength agent may be added to the pulp before the base paper is formed.

The wet strength agent may be selected from a urea resin, urea-formaldehyde, melamine resin, melamine-formaldehyde, polyaminoamideepichlorohydrin, and polyamineepihydrochlorin or combinations thereof.

The wet-strength agent may be present in the base paper in an amount of from about 0.01 wt% to about 5 wt% based on the total dry weight of the base paper (i.e., the weight of the base paper after drying, but which has not been treated with the hydrophobic, stiffening binder resin), optionally of from about 0.05 wt% to about 4 wt%, optionally of from about 0.1 wt% to about 3 wt%, of from about 0.5 wt% to about 2.5 wt%, optionally from about 0.75 wt% to about 2 wt%, optionally about 1.25 wt%.

The wet-strength agent may be present in the filter medium in an amount of from about 0.008 wt% to about 4.5 wt% based on the total weight of the filter medium, optionally of from about 0.04 wt% to about 3.6 wt%, optionally of from about 0.08 wt% to about 2.7 wt%, of from about 0.2 wt% to about 2.25 wt%, optionally from about 0.6 wt% to about 1.8 wt%, optionally about 1 wt%.

The filter medium may be corrugated. The filter medium may be a corrugated filter medium. The properties and optional and preferred features of the filter medium apply equally to the corrugated filter medium and *vice versa.*

The corrugated filter medium may comprise a plurality of troughs and ridges (i.e., it is corrugated). The distance between adjacent ridges in the corrugated filter medium may be from about 0.1 mm to about 20 mm, optionally from about 0.5 mm to about 15 mm, optionally from about 1 mm to about 10 mm, optionally from about 2 mm to about 8 mm, optionally from about 3 mm to about 5 mm. The filter medium may comprise greater than 2 ridges, optionally greater than 5 ridges, optionally greater than 10 ridges, optionally greater than 50 ridges, optionally greater than 100 ridges, optionally greater than 1000 ridges. The filter medium may comprise between 2 ridges to 1000 ridges, optionally between 2 ridges to 500 ridges, optionally between 5 ridges to 500 ridges, optionally between 10 ridges to 100 ridges. The corrugation thickness of the corrugated filter medium (i.e., the distance across the shortest dimension of the corrugated filter medium, where this distance increases with increased corrugation amplitude) may be from about 0.1 mm to about 20 mm, optionally from about 0.5 mm to about 15 mm, optionally from about 1 mm to about 10 mm, optionally from about 2 mm to about 8 mm, optionally from about 3 mm to about 5 mm.

The filter medium may have an air permeability of from about 5 L/m²s to about 2000 L/m²s, optionally from about 20 L/m²s to about 1800 L/m²s, optionally from about 40 L/m²s to about 1500 L/m²s, optionally from about 50 L/m²s to about 1250 L/m²s, optionally from about 60 L/m²s to about 1000 L/m²s, optionally from about 100 L/m²s to about 800 L/m²s optionally of from about 250 L/m²s to 500 L/m²s. Air permeability may be measured according to DIN EN ISO 9237 at a pressure difference of 200 Pa and a sample size of 20 cm² using a Textest FX3300 instrument with a 20 cm² testing head. The filter medium may have an air permeability of from at least 5 L/m²s, optionally at least 20 L/m²s, optionally at least 50 L/m²s, optionally at least 100 L/m²s, optionally at least 250 L/m²s.

The filter medium of the present disclosure was shown to have good water redrying behaviour. The faster rate of drying for the filter medium indicates that the filter medium has improved hydrophobicity. It is therefore desirable for the filter medium to have a faster rate of drying. The redrying behaviour of the filter medium can be defined as the time required for a soaked sample of filter medium to recover its air permeability to a level equal to that of the unsoaked sample. Complete redrying of the filter medium is also defined as the time taken to recover an air permeability equal to that of the unsoaked sample.

The drying behaviour of a sample can be determined as followed:
(i) The air permeability of the sample of filter medium is measured.
(ii) The sample of filter medium is then soaked in deionised water for 10 minutes at 23 °C.
(iii) The sample is then blotted between two pieces of blotting paper.
(iv) The air permeability of the soaked filter paper is measured and the time taken for it to recover to the level measured in (i) is recorded by a constant differential pressure as mentioned above.

The filter medium of the present disclosure may have a complete redrying time of less than about 30 minutes, optionally less than about 25 minutes, optionally less than about 20 minutes, optionally less than about 15 minutes, optionally less than about 10 minutes, optionally less than about 8 minutes.

The filter medium may have a maximum tensile force of greater than about 800 N, optionally greater than about 850 N, optionally greater than about 900 N, optionally greater than about 950 N, optionally greater than 1000 N. The maximum tensile force can be defined as the maximum tensile force which the filter medium can withstand before it rips or ruptures. It is preferable for the filter medium to have a higher maximum tensile force in order for the filter to have improve wear properties and be less likely to rip during use. The maximum tensile force can be measured according to DIN EN ISO 1924-2.

The filter medium may have a maximum tensile stress of greater than about 100 kPa, optionally greater than about 110 kPa, optionally greater than about 120 kPa, optionally greater than about 130 kPa, optionally greater than about 140 kPa, optionally greater than about 150 kPa. The maximum tensile stress of the filter medium can be defined as the maximum tensile stress that can be applied to the paper before it ruptures or tears. It is preferable for the filter medium to have a higher maximum tensile force in order for the filter to have improve wear properties and be less likely to rip during use. The maximum tensile stress can be measured according to DIN EN ISO 1924-2.

The filter medium may have a basis weight of from about 50 g/m² to about 400 g/m², optionally from about 60 g/m² to about 300 g/m², optionally from about 80 g/m² to about 150 g/m². The basis weight may be measured according to EN ISO 536:2019.

The base paper of the filter medium (i.e., the base paper before treatment with the hydrophobic, stiffening binder resin) may have a thickness (the shortest distance from one side of the base paper to the other, excluding corrugations) of from about 0.05 mm to about 3 mm, optionally from about 0.05 to about 2 mm, optionally from about 0.1 mm to about 1.5 mm, optionally from about 0.1 mm to about 1 mm, optionally from about 0.15 mm to about 0.8 mm, optionally from about 0.15 mm to about 0.5 mm, optionally about 0.32 mm. The thickness may be measured according to EN ISO 534:2012-02 with a foot pressure of 0.1bar.

The filter medium may have a thickness (the shortest distance from one side of the base paper to the other, excluding corrugations) of from about 0.05 mm to about 3 mm, optionally from about 0.05 to about 2 mm, optionally from about 0.1 mm to about 1.5 mm, optionally from about 0.1 mm to about 1 mm, optionally from about 0.15 mm to about 0.8 mm, optionally from about 0.15 mm to about 0.5 mm, optionally about 0.35 mm. The thickness may be measured according to EN ISO 534:2012-02 with a foot pressure of 0.1bar.

The corrugated filter medium may have a thickness (the shortest distance from one side of the base paper to the other, including corrugations) of from about 0.05 mm to about 3 mm, optionally from about 0.05 to about 2 mm, optionally from about 0.1 mm to about 1.5 mm, optionally from about 0.2 mm to about 1 mm, optionally from about 0.3 mm to about 0.9 mm, optionally from about 0.4 mm to about 0.8 mm, optionally about 0.65 mm. The thickness may be measured according to EN ISO 534:2012-02 with a foot pressure of 0.1bar.

The base paper, before application of the hydrophobic, stiffening binder resin, may comprise a cellulose content of at least 90 wt% (based on the solids content of the base paper) and a sizing agent of from about 0.1 wt% to about 1.5 wt% (based on the solids content of the base paper). The base paper may comprise a cellulose content of at least 90 wt% (based on the solids content of the base paper), a sizing agent of from about 0.1 wt% to about 1.5 wt%, and a wet-strength agent of from about 0.1 wt% to about 1.5 wt%.

The filter medium may comprise a sizing agent content of from about 0.05 wt% to about 5 wt% based on the weight of the filter medium, optionally of from about 0.1 wt% to about 4 wt%, optionally of from about 0.1 wt% to about 3 wt%, optionally of from about 0.1 wt% to about 2 wt%, optionally of from about 0.1 wt% to about 1.5 wt%, and a hydrophobic, stiffening binder resin content of from about 5 wt% to about 30 wt% based on the weight of the filter medium, optionally from about 7 wt% to about 28 wt%, optionally from about 8 wt% to about 25 wt%, optionally from about 9 wt% to about 22 wt%, optionally from about 10 wt% to about 20 wt%, optionally about 15 wt%.

The filter medium may comprise a sizing agent content of from about 0.05 wt% to about 5 wt%, optionally of from about 0.1 wt% to about 4 wt%, optionally of from about 0.1 wt% to about 3 wt%, optionally of from about 0.1 wt% to about 2 wt%, optionally of from about 0.1 wt% to about 1.5 wt%, and a hydrophobic, stiffening binder resin of from about 5 wt% to about 30 wt%, optionally from about 7 wt% to about 28 wt%, optionally from about 8 wt% to about 25 wt%, optionally from about 9 wt% to about 22 wt%, optionally from about 10 wt% to about 20 wt%, optionally about 15 wt%, and a wet-strength agent in an amount of from about 0.05 wt% to about 5 wt%.

### Method of producing a filter medium

In a second aspect, there is provided a method of producing a filter medium, the method comprising:
providing a nonwoven layer having been treated with a sizing agent, treating the nonwoven layer with a hydrophobic, stiffening binder resin to form the filter medium,
and optionally then corrugating the filter medium to form a corrugated filter medium.

The filter medium of the present disclosure, in accordance with any of the preferred and optional features previously discussed, and combinations thereof, may be produced according to the second aspect.

The base paper of the filter medium may be produced by refining raw materials in a refiner to form a pulp. The pulp may be formed into the base paper in a paper making machine. The sizing agent may be added to the pulp before it is made into the base paper. The base paper may also comprise a wet-strength agent which was added to the pulp before the formation of the base paper. The sizing agent may be added to the base paper in a separate process, such as in a sizing press.

Treatment of the base paper with the hydrophobic, stiffening binder resin may be achieved by any suitable process, for example, dip-impregnation, size-press impregnation, double-sided roller application and double-sided spraying. Treatment of the base paper with the hydrophobic, stiffening binder resin may be impregnation. Impregnation of the base paper with the hydrophobic, stiffening binder resin may be achieved by submerging the base paper into an impregnation solution followed by drying of the base paper. Alternatively, impregnation may be achieved by a drop coating process, where the impregnation solution is dropped onto the base paper. The impregnation solution may be contacted with the base paper by roller coating (e.g., kiss coating or double kiss coating), curtain coating, gravure coating, flexography coating, offset coating, reverse offset coating, or a combination thereof. The impregnation solution may be contacted with the base paper from both surfaces of the base paper simultaneously or sequentially. The impregnation solution may be contacted with the base paper by roller coating. In some examples, the impregnation solution may be contacted with the base paper by double kiss coating. The treatment may have been asymmetric impregnation.

The base paper may have been dried before impregnation (i.e., some or all of the water from the base paper was removed). The impregnation solution comprises a hydrophobic, stiffening binder resin. The impregnation solution may comprise a hydrophobic, stiffening binder resin and a wetting-agent, where the wetting agent aids penetration of the hydrophobic, stiffening binder resin into the base paper.

The base paper, after impregnation, may be cured. The treated paper may further be cured either after drying or after conversion of the medium (where conversion of the medium is, for example, but not limited to, pleating, corrugating, embossing, or having built a filter element). Curing may be required to chemically bind the hydrophobic, stiffening binder resin to the fibres of the base paper or to other molecules of the resin. Curing may occur during drying or after drying. The paper may be cured at the drying stage, the curing stage, or both stages, at a temperature of greater than about 100 °C, optionally greater than about 120 °C, optionally greater than about 150 °C, optionally greater than about 170 °C, optionally greater than about 185 °C, optionally greater than about 200 °C. The temperature of drying may be from about 50 °C to about 300 °C, optionally from about 50 °C to about 275 °C, optionally from about 60 °C to about 250 °C, optionally from about 70 °C to about 225 °C, optionally about 70 °C to about 200 °C.

Curing of the binder resin may occur at a temperature of greater than about 1000 °C, optionally greater than about 120 °C, optionally greater than about 150 °C, optionally greater than about 170 °C, optionally greater than about 185 °C, optionally greater than about 200 °C.

Corrugation to form the corrugated filter medium may occur in a corrugator. The corrugated filter medium can be made by passage of the filter paper of the present disclosure between a pair of corrugated rollers having tapered teeth. After corrugation, the corrugated filter medium may be left as a flat corrugated filter medium in a frame or wound into a tubular shape and the ends connected and attached by, for example, an adhesive, endcaps, or pins.

### Filter element

In a third aspect, there is provided a filter element comprising the filter medium of the first aspect.

The filter medium of the present disclosure may be incorporated into a filter element. It is noted that the filter medium which is present in the filter element may have any of the optional and preferred features, and combinations thereof, as previously described. The filter element may be incorporated into or be part of a filtration device.

The filter medium of the present disclosure may be incorporated into a filter element for use in filtering liquid or gasses (i.e., for the removal of unwanted matter from a stream of liquid or gas). The filter element may comprise a filter medium disposed within a frame. The frame may ensure that the filter medium maintains a particular shape during use of the filter element. Alternatively, one or more of the filter medium may be wound into a tubular shape and, optionally, the ends connected and attached by, for example, an adhesive, endcaps, or pins.

The filter medium may be incorporated into a gas filter element, liquid filter element, air filter element, fuel filter element, oil filter element, or electric discharge filter element. The liquid filter element may be a lube oil filter element, an oil filter element, a fuel filter element, or a hydraulic filter element. The air filter element may be a cabin air filter element (e.g., for automotive applications), gas turbine filter element, or an HVAC filter element. In some examples, the air filter element may be an air intake filter element for automotive applications.

The efficiency of filtration for the filter element which comprises the filter medium, particularly for removal of undesired water, may be improved by the use of the filter medium of the present disclosure. The lifetime of the filter element incorporating the filter medium of the present disclosure may be improved or increased compared to when other filter media are used which do not comprise an impregnated hydrophobic, stiffening binder resin and a sizing agent.

The filter elements comprising the filter medium of the present disclosure may be or be used in medical devices, transportation devices, automotive devices, machinery, ventilation systems, water filtration devices, vacuum cleaners, dedusting devices, waste fume filtration devices, personal protection equipment, HVAC systems, gas turbine air intakes, electrical discharge machining, air pollution control devices, and climate control devices.

The filter medium may be removable and replaceable from the filter elements in which it is incorporated therein.

The filter medium may be a fuel filter, oil filter, or an electric discharge filter.

### Examples

The presently disclosed subject matter will be further described by reference to the following non-limiting Examples.

### Example 1

The present inventors found that filter media comprising a sizing agent which were then impregnated with a hydrophobic, stiffening binder resin were hydrophobic, even after corrugation. The inventors further found that when the hydrophobic, stiffening binder resin was impregnated in the presence of a wetting agent, the resultant filter medium was more hydrophobic (as determined by an improved redrying time). The filter media were also found to have favourable properties including maximum tensile force and maximum tensile stress.

The redrying behaviour and physical properties of different filter medium were evaluated. The base filter paper was produced from 100% cellulose fibres with the addition of a wet strength agent (0.1 wt% to 1.5 wt%) and an AKD sizing agent (0.1 wt% to 1.5 wt%), using a wet-laid technique. The wt% of the wet strength agent and sizing agent are based on the total weight of the base filter paper (before treatment with the impregnation solutions). The base paper had a basis weight of 100 g/m² and a thickness of 0.32 mm.

Samples of the base filter paper were then treated with various impregnation solutions, dried for 5 minutes at 70 °C, then their properties measured. The formulations of the impregnation solutions are summarised in table 1 and redrying behaviour in table 2.

After impregnation and drying, the filter medium had a basis weight of 120 g/m² and a thickness of 0.35 mm. The total thickness of the corrugated filter medium including corrugations was 0.67 mm.

**Table 1. Formulations of impregnation solutions.**

| **Impregnation solution** | | | | | | | | |
|---|---|---|---|---|---|---|---|---|
| **Component (wt%)** | **reference** | **282/1** | **283/1** | **283/2** | **283/3** | **283/4** | **283/5** | **283/6** |
| **Acrylic resin** | 150 | 18.5 | 150 | 18.5 | 150 | 18.5 | 150 | 18.5 |
| **Urea resin** | 2.3 | 0.0 | 2.3 | 0.0 | 2.3 | 0.0 | 2.3 | 0.0 |
| **Buffer** | 3.0 | 3.2 | 3.0 | 3.2 | 3.0 | 3.2 | 3.0 | 3.2 |
| **Melamine resin** | 0.3 | 0.5 | 0.3 | 0.5 | 0.3 | 0.5 | 0.3 | 0.5 |
| **Acid** | 10 | 00 | 10 | 00 | 10 | 00 | 10 | 00 |
| **Silicon resin** | 0.050 | 0.050 | 0.050 | 0.050 | 0.050 | 0.050 | 0.050 | 0.050 |
| **Wetting agent 1** | 0.000 | 0.000 | 0.039 | 0.039 | 0.000 | 0.000 | 0.000 | 0.000 |
| **Wetting agent 2** | 0.000 | 0.000 | 0.000 | 0.000 | 0.039 | 0.039 | 0000 | 0.000 |
| **Wetting agent 3** | 0000 | 0.000 | 0000 | 0.000 | 0.000 | 0.000 | 0.039 | 0.039 |
| **Methanol** | 78.320 | 77.750 | 78.281 | 77.711 | 78.281 | 77.711 | 78.281 | 77.711 |
| **Total** | 1000 | 1000 | 1000 | 1000 | 1000 | 1000 | 1000 | 100.0 |

In Table 1, the hydrophobic, stiffening binder resins are: acrylic resin, melamine resin and silicon resin; Wetting agents 1 to 3 are wetting agents - Wetting agent 1 is a non-ionic organic surfactant, Wetting agent 2 is an anionic surfactant (Sodium dioctyl sulfosuccinate), and Wetting agent 3 is a surfactant (alcohol alkoxylates); methanol was the solvent.

**Table 2. Redrying behaviour of impregnated filter paper.**

| **Sample** | **Impregnation Solution** | **Resin content (wt%)** | **Wetting Agent** | **Air Permeability Before (L/m²s)** | **Air Permeability Initial (L/m²s)** | **Redrying Time (minutes)** |
|---|---|---|---|---|---|---|
| 1 | reference | 17.5 | None | 109 | 29 | 10 |
| 2 | reference | 17.5 | None | 107 | 32 | 8 |
| 3 | 282/1 | 17 | None | 106 | 28 | 9 |
| 4 | 282/1 | 17 | None | 109 | 29 | 9 |
| 5 | 283/1 | 17.3 | Wetting agent 1 | 111 | 63 | 5 |
| 6 | 283/1 | 17.3 | Wetting agent 1 | 109 | 35 | 7 |
| 7 | 283/2 | 17.1 | Wetting agent 1 | 106 | 10 | 18 |
| 8 | 283/2 | 17.1 | Wetting agent 1 | 105 | 21 | 11 |
| 9 | 283/3 | 17.1 | Wetting agent 2 | 108 | 45 | 10 |
| 10 | 283/3 | 17.1 | Wetting agent 2 | 108 | 30 | 9 |
| 11 | 283/4 | 17.1 | Wetting agent 2 | 101 | 6 | Abandoned |
| 12 | 283/4 | 17.1 | Wetting agent 2 | 101 | 13 | 16 |
| 13 | 283/5 | 17.2 | Wetting agent 3 | 104 | 37 | 7 |
| 14 | 283/5 | 17.2 | Wetting agent 3 | 106 | 51 | 6 |
| 15 | 283/6 | 17.5 | Wetting agent 3 | 105 | 24 | 13 |
| 16 | 283/6 | 17.5 | Wetting agent 3 | 104 | 19 | 19 |

**Table 3. Redrying behaviour of impregnated filter paper (machine trial).**

| Sample | Impregnation Solution | Resin content (wt%) | Wetting Agent | Air Permeability Before (L/m²s) | Air Permeability Initial (L/m²s) | Redrying Time (minutes) |
|---|---|---|---|---|---|---|
| 1 | Example 2 (without sizing and wetting agent) | 17.5 | None | 111 | 1.5 | Abandoned (>20min) |
| 2 | Example 3 (According to table 2 sample 5) | 18 | Wetting agent 1 | 109 | 25 | 11 |

The redrying behaviour of samples of impregnated filter paper were evaluated. The redrying behaviour of the filter medium can be defined as the time required for a soaked sample of filter medium to recover its air permeability to a level equal to that of the unsoaked sample. Complete redrying of the filter medium is also defined as the time taken to recover an air permeability equal to that of the unsoaked sample.

The redrying behaviour of a sample was determined as followed:
(i) The air permeability of the sample of dry filter medium was measured (Air permeability before in table 2).
(ii) The sample of filter medium was then soaked in deionised water for 10 minutes at 23 °C.
(iii) The sample was then blotted between two pieces of blotting paper.
(iv) The air permeability of the soaked filter paper initially after soaking was measured (Air permeability initial in table 2) and the time taken for it to recover to the level measured in (i) was recorded (Redrying time in table 2).

The air permeability was measured according to DIN EN ISO 9237 at a pressure difference of 200 Pa and a sample size of 20 cm² using a Textest FX3300 instrument with a 20 cm² testing head.

The inventors found that treating the paper with a sizing agent before application of the hydrophobic, stiffening resin eliminated or ameliorated the water ingress into the corrugated paper.

The inventors further found that samples which were impregnated with an impregnation solution comprising a hydrophobic, stiffening binder resin and a wetting agent, particularly Tegowet 550 (a non-ionic organic surfactant) had faster redrying times (samples 5 and 6 of table 2 and sample 2 of table 3). This indicates that the presence of the wetting agent resulted in improved penetration of the hydrophobic, stiffening binder resin and therefore improved hydrophobicity. Without wishing to be bound to a particular theory, it is believed that the presence of the hydrophobic sizing agent in the base paper prevents the polar impregnation solution (e.g., an impregnation solution comprising methanol) from readily penetrating the fibres of the paper. The addition of the wetting agent may facilitate the penetration of the impregnation solution into the base paper.

The maximum tensile force and maximum tensile stress of samples of filter medium were also evaluated (table 4). The filter media which were impregnated with a hydrophobic, stiffening binder resin had improved tensile properties, demonstrated by their increased maximum tensile stress and force when compared with samples without a hydrophobic, stiffening binder resin. Furthermore, samples impregnated with an impregnation solution comprising a wetting agent, particularly Wetting agent 1 (a non-ionic organic surfactant) had the best tensile properties (samples 5 and 7). The maximum tensile stress and force were measured according to DIN EN ISO 1924-2. Sample 17 (Example 4) in table 4 is the same base paper as Example 1, but it does not comprise a sizing agent. Sample 19 (Example 5) is the same base paper as Example 1, but it was not impregnated.

**Table 4. Z-Direction Tensile Properties of filter paper.**

| **Sample** | **Impregnation Solution** | **Max tensile force (N)** | **Max tensile stress (kPa)** |
|---|---|---|---|
| 1 | reference | 924 | 152 |
| 3 | 282/1 | 968 | 159 |
| 5 | 283/1 | 1025 | 168 |
| 7 | 283/2 | 1023 | 168 |
| 9 | 283/3 | 891 | 146 |
| 11 | 283/4 | 836 | 137 |
| 13 | 283/5 | 915 | 151 |
| 15 | 283/6 | 864 | 143 |
| 17 (Example 4 - machine trial) | reference | 197 | 32 |
| 19 (Example 5 - Raw) | None | 352 | 58 |
| 20 (Example 6) | None | 348 | 57 |

## Claims

1. A filter medium comprising:
a nonwoven layer, the nonwoven layer having been treated with a sizing agent,
and then treated with a hydrophobic, stiffening binder resin, and then optionally corrugated.

2. The filter medium of claim 1, wherein the nonwoven layer is treated with the hydrophobic, stiffening binder resin by impregnation.

3. The filter medium of any preceding claim, wherein the nonwoven layer is selected from a base paper and a nonwoven fabric, and, optionally, the nonwoven layer is or comprises a base paper, and optionally the base paper comprises a material selected from plants, cotton, wood, hardwood, softwood, linen, cotton linters, hemp, straw, jute, flax, esparto, sulphate pulps, synthetic fibres, and mineral fibres.

4. The filter medium of any preceding claim, wherein the nonwoven layer, before being treated with a hydrophobic, stiffening binder resin, comprises a solids content of cellulose of at least about 40 wt%, optionally at least about 50 wt%, optionally at least about 60 wt%, optionally at least about 70 wt%, optionally at least about 80 wt%, optionally at least about 90 wt%, optionally at least about 95 wt%.

5. The filter medium of any of claims 1-3, wherein the materials comprising the nonwoven layer are selected from glass fibres and polyester fibres.

6. The filter medium of any preceding claim, wherein the sizing agent is selected from an alkyl ketene dimer (AKD), alkenyl ketene dimer, an alkenylsuccinic anhydride, stearic anhydride, rosin, silicones, fluorochemicals, resins, polyolefin emulsions, natural waxes, synthetic waxes, and latex; or wherein the sizing agent is AKD.

7. The filter medium of any preceding claim, wherein the filter medium comprises the sizing agent in an amount of from about 0.1 wt% to about 3 wt% based on the total solid content weight of the nonwoven layer.

8. The filter medium of any preceding claim, wherein the hydrophobic, stiffening binder resin is selected from an acrylic resin, phenolic resin, epoxy resin, a silicone resin, acryl nitril, acryl nitril butadiene styrol, acryl nitril styrol acrylate, ethylene-vinyl acetate (EVA), styrene butadiene rubber (SBR), rosin resin, polyvinyl chloride resin, polyvinylidene chloride resins, and polyvinylidene fluoride resins.

9. The filter medium of any preceding claim, wherein the filter medium comprises the hydrophobic, stiffening binder resin in an amount of from about 5 wt% to about 30 wt% based on the total weight of the saturated filter medium, optionally from about 7 wt% to about 28 wt%, optionally from about 8 wt% to about 25 wt%, optionally from about 9 wt% to about 22 wt%, optionally from about 10 wt% to about 20 wt%, optionally about 15 wt%.

10. The filter medium of any preceding claim, wherein the hydrophobic, stiffening binder resin was impregnated in an impregnation solution, the impregnation solution further comprising a wetting agent; optionally wherein the wetting agent is selected from an anionic surfactant, cationic surfactant, or non-ionic surfactant; or optionally wherein the wetting agent is a non-ionic organic surfactant.

11. The filter medium of claim 10, wherein the filter medium comprises the wetting agent in an amount of from about 0.00015 wt% to about 1.5 wt% based on the total weight of the filter medium, optionally from about 0.0002 wt% to about 1 wt%, optionally from about 0.0005 wt% to about 0.5 wt%, optionally from about 0.001 wt% to about 0.25 wt%, optionally from about 0.002 wt% to about 0.1 wt%, optionally from about 0.01 wt% to about 0.05 wt%, optionally about 0.035 wt%.

12. The filter medium of any preceding claim, wherein the nonwoven layer comprises a wet-strength agent; optionally wherein the wet-strength agent is selected from a urea resin, urea-formaldehyde, melamine resin, melamine-formaldehyde, polyaminoamideepichlorohydrin and polyamineepihydrochlorin or combinations thereof; and optionally wherein the filter medium comprises the wet-strength agent in an amount of from about 0.008 wt% to about 4.5 wt% based on the total weight of the filter medium, optionally of from about 0.04 wt% to about 3.6 wt%, optionally of from about 0.08 wt% to about 2.7 wt%, of from about 0.2 wt% to about 2.25 wt%, optionally from about 0.6 wt% to about 1.8 wt%, optionally about 1 wt%.

13. The filter medium of any preceding claim, wherein the filter medium has a complete redrying time of less than about 30 minutes, optionally less than about 25 minutes, optionally less than about 20 minutes, optionally less than about 15 minutes, optionally less than about 10 minutes, optionally less than about 8 minutes.

14. A filter element comprising the filter medium of any preceding claim.

15. A filter medium according to any of claims 1 to 13 or a filter element according to claim 14, wherein the filter medium is a fuel filter, oil filter, air filter, or an electric discharge filter.
